# EUROPÄISCHE PATENTSCHRIFT

(11) **EP 0 782 517 B1**
(45) Veröffentlichungstag und Bekanntmachung des Hinweises auf die Patenterteilung: **17.03.1999**
(21) Anmeldenummer: 95934116.5
(22) Anmeldetag: 29.09.1995
(51) Int. Cl.: B60T 8/48, B60T 8/40, B60T 8/24

(54) **VERFAHREN ZUR DRUCKREGELUNG EINER HYDRAULISCHEN BREMSANLAGE**
PRESSURE-REGULATING METHOD FOR A HYDRAULIC BRAKING SYSTEM
PROCEDE DE REGULATION DE PRESSION POUR SYSTEME DE FREINAGE HYDRAULIQUE

(30) Priorität: 30.09.1994 DE 4434960
(43) Veröffentlichungstag der Anmeldung: 09.07.1997
(73) Patentinhaber: Continental Teves AG & Co. oHG, 60488 Frankfurt (DE)
(72) Erfinder: VOLZ, Peter, D-64291 Darmstadt (DE); DINKEL, Dieter, D-65817 Eppstein/Ts. (DE); REINARTZ, Hans-Dieter, D-60439 Frankfurt am Main (DE)
(86) Internationale Anmeldenummer: EP9503849
(87) Internationale Veröffentlichungsnummer: WO9610507

(56) Entgegenhaltungen:
- EP-A- 0 509 237
- WO-A-89/08573
- WO-A-93/22169
- WO-A-94/27848
- DE-A- 3 819 490
- DE-A- 3 831 426
- DE-A- 4 002 865
- DE-A- 4 119 662
- DE-A- 4 232 132
- DE-C- 4 232 311

## Beschreibung

Die vorliegende Erfindung betrifft eine hydraulische Bremsanlage gemäß dem Oberbegriff des Anspruchs 1 und ein Verfahren zur Druckregelung in einer solchen Bremsanlage.

Eine derartige Bremsanlage ist aus der DE- 41 28 386 A1 bekannt. Diese bekannte Bremsanlage dient zur Bremsschlupfregelung und zur Antriebsschlupfregelung. Während einer Bremsschlupfregelung arbeitet sie nach den Rückförderprinzip, während zur Antriebsschlupfregelung die Pumpe der Bremsanlage selbstansaugend ausgelegt ist und über die zweite Saugleitung Druckmittel über den Hauptzylinder aus dem Vorratsbehälter ansaugen kann. Das Trennventil in der Bremsleitung ist ein elektromagnetisch betätigtes Ventil, welches stromlos offen ist und in seiner bestromten Schaltstellung eine Druckbegrenzungsfunktion ausübt. Übersteigt der Förderdruck der Pumpe im Vergleich zum Hauptzylinderdruck einen bestimmten Wert, so strömt Druckmittel über das Trennventil zum Hauptzylinder ab. Dies bedingt eine Verlustleistung der Pumpe, welche einen zur Antriebsschlupfregelung unnötig hohen Druck erzeugt.

Die EP-A-0.509.237 schlägt eine Bremsanlage der eingangsgenannten Art vor, welche eine Druckregelung durch Schaltung der den Radbremsen zugeordneten Auslaßventile, durch zeitweises Umschalten der in den Bremsleitungen befindlichen Trennventile sowie durch Abschalten der selbstansaugenden Rückförderpumpe vorsieht.

Aus der WO-A-9.322.169 geht eine ebenfalls gattungsgemäße Bremsanlage hervor, bei welcher eine elektronische Steuerung der Aufnahmeleistung des Pumpenmotors dadurch unnötig gemacht wird, daß während einer Antriebsschlupfragelung die Einlaßventile zu den Rdbremsen angetriebener Räder permanent geöffnet bleiben und ein Druckabbau durch zeitweiliges Umschalten des Trnnventils und der Auslaßventile erfolgt. Damit wird die Funktion eines dem Trennventil parallelgeschalteten Überdruckventils unnötig und eine Greäuschreduzierung erzielt.

Soll eine derartige Bremsanlage aber auch Bremseneingriffe vornehmen, die nicht nur einen Bremsschlupf oder Antriebsschlupf beseitigen sollen, sondern zur allgemeinen Fahrstabilitätsregelung, beispielsweise beim ungebremsten Durchfahren einer Kurve, beitragen sollen, dann ist es wünschenswert, daß der Förderdruck der Pumpe nicht auf einen konstanten Differenzwert zwischen Druckleitung und Hauptzylinder festgelegt ist oder die Pumpe abgeschaltet wird, sondern eine bedarfsgerechte, variable Regelung des Förderdruckes möglich ist, ohne eine zu hohe Verlustleistung herbeizuführen.

Dies wird gemäß der vorliegenden Erfindung erreicht mit den kennzeichnenden Merkmalen des Anspruchs 1. Durch eine elektronische Begrenzung der Druckmittelzufuhr zur Saugseite der Pumpe lassen sich prinzipiell beliebige Förderdrücke einstellen, wobei die Pumpe immer nur soviel Druck aufbaut, wie benötigt wird. Trotzdem wird keine feinstufige Verstellung des Pumpenmotors erforderlich. Zur Auswertung werden als Meßgrößen der Hauptzylinderdruck und der momentane tatsächliche Förderdruck der Pumpe herangezogen werden. Der Förderdruck der Pumpe wird ermittelt, indem der Motorstrom gemessen und mit einem gespeicherten Motorkennfeld verglichen wird. Der sich hieraus ergebende Volumenstrom kann dann anhand eines Druck-Volumen-Modells, welches im elektronischen Steuergerät abgelegt ist, auf den aktuellen Förderdruck der Pumpe umgerechnet werden. Dabei fließen die Schaltzeit des Auslaßventils und die Größe des Niederdruckspeichers mit ein.

Der Hauptzylinderdruck kann dabei von Drucksensoren erfaßt werden, die in der Bremsleitung zwischen Hauptzylinder und Trennventil angeordnet sind.

Eine nähere Erläuterung des Erfindungsgedankens erfolgt nun anhand der Beschreibung einer Zeichnung in drei Figuren.

Es zeigt:
- Fig. 1: eine erfindungsgemäße Bremsanlage,
- Fig. 2 und Fig. 3: je einen Ausschnitt aus einer erfindungs- gemäßen Bremsanlage, der anstelle des gestrichelt umrandeten Ausschnittes in Fig. 1 einfügbar ist.

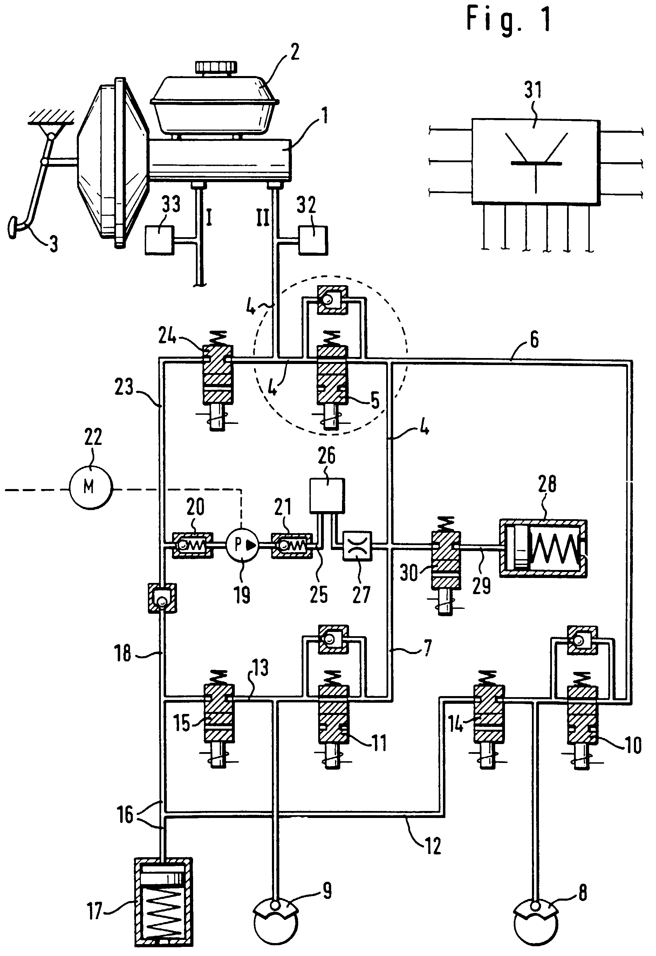

In der Bremsanlage nach Fig. 1 gehen vom Hauptzylinder 1 zwei identisch aufgebaute Bremskreise I und II aus, von denen nur der Bremskreis II dargestellt ist. Der Hauptzylinder 1 ist an den Vorratsbehälter 2 angeschlossen und über das Bremspedal 3 zu betätigen, so daß ein Bremsdruck in den Bremskreisen I und II aufgebaut wird. Vom Hauptzylinder 1 geht die Bremsleitung 4 aus und verläuft durch das Trennventil 5. Von der Bremsleitung 4 führen die Bremszweige 6 und 7 zu jeweils einer der Radbremsen 8 und 9. In die Bremszweige 6 und 7 ist jeweils eine Einlaßventil 10 bzw. 11 eingefügt. Von den Radbremsen 8 und 9 verlaufen Rücklaufzweige 12 und 13 zu einer Rücklaufleitung 16, an welche der Niederdruckspeicher 17 angeschlossen ist. In den Rücklaufzweigen 12 und 13 sind die Auslaßventile 14 und 15 angeordnet. Vom Niederdruckspeicher 17 führt eine erste Saugleitung 18 zur Saugseite der Pumpe 19, die mit einem Saugventil 20 und einem Druckventil 21 versehen ist. Die Pumpe 19 ist selbstansaugend und wird vom Motor 22 angetrieben. Eine zweite Saugleitung 23 verbindet die Saugseite der Pumpe 19 mit der Bremsleitung 4, zwischen Hauptzylinder 1 und Trennventil 5. In diese zweite Saugleitung 23 ist ein Umschaltventil 24 eingefügt. Die Druckseite der Pumpe 19 ist über die Druckleitung 25 an die Bremsleitung 4 zwischen Trennventil 5 und den Einlaßventilen 10 und 11 angeschlossen. In der Druckleitung 25 ist eine Dämpfungskammer 26 mit nachgeschalteter Drosselstelle 27 angeordnet. In Höhe des Anschlusses der Druckleitung 25 an die Bremsleitung 4 ist außerdem ein Hochdruckspeicher 28 über eine Speicherleitung 29 an die Bremsleitung 4 angeschlossen. In der Speicherleitung 29 liegt ein Schaltventil 30. Während die Einlaßventile 10 und 11 sowie das Trennventil 5 als elektromagnetisch betätigte, stromlos offene 2/2-Wegeventile gestaltet sind, sind die Auslaßventilen 14,15 sowie das Umschaltventil 24 und das Schaltventil 30 elektromagnetisch betätigte, stromlos geschlossene Ventile.

Die Funktionsweise der dargestellten Bremsanlage während einer Bremsschlupfregelung und einer Antriebsschlupfregelung ist dem Stand der Technik zu entnehmen. Zur Fahrstabilitätsregelung, sei es mit oder sei es ohne Betätigungsbremspedal, wird der Hochdruckspeicher 28 durch Umschalten des Schaltventils 30 mit einer oder beiden der Radbremsen 8 und 9 verbunden. Dies sorgt für einen schnellen Druckaufbau auch bei tiefen Temperarturen, wenn die Bremsflüssigkeit hochviskos ist. Bei diesen Vorgängen wird das Trennventil 5 geschlossen, damit bei unbetätigtem Bremspedal 3 der vom Hochdruckspeicher 28 aufgebaute Druck nicht in den Hauptzylinder 1 abwandert und damit bei betätigtem Bremspedal 3 Rückwirkungen auf das Bremspedal 3 minimiert werden. Das gestrichelt umrandete Trennventil 5 weist im Unterschied zum Stand der Technik kein Überdruckventil auf, welches von der Druckseite der Pumpe 19 zum Hauptzylinder 1 hin öffnet. Zur variablen Regelung des Förderdrucks der Pumpe 19 ist nämlich vorgesehen, den Motorstrom des Elektromotors 22 bedarfsgerecht zu regeln. Hierzu verwertet das elektronische Steuergerät 31 Informationen über den Hauptzylinderdruck, den es von den Drucksensoren 32 und 33 in den Bremsleitungen unmittelbar am Hauptzylinder 1 erhält. Der momentan vorherrschende Förderdruck der Pumpe 19 wird ermittelt, indem der momentane Motorstrom gemessen wird, mit einem im elektronischen Steuergerät 31 abgelegten Motorkennfeld verglichen wird und das daraus ermittelte Fördervolumen anhand eines ebenfalls im elektronischen Steuergerät abgelegten Druck-Volumen-Modells in den Förderdruck umgerechnet wird. Dabei fließen die Druckmitteldurchsätze durch die Auslaßventile bei gegebenen Schaltzeiten sowie die Niederdruckspeichergröße ein. Als mögliche Maßnahmen zur Regelung des Förderdrucks der Pumpe 19 kommen außer der Regelung des Motorstroms auch noch eine zeitweise Umschaltung des Trennventils 5 sowie eine elektromagnetisch betätigte Schließung des Saugventils 20 in Frage. Auf eine spezielle Darstellung des Saugventils 20 wurde aus Gründen der Übersichtlichkeit verzichtet.

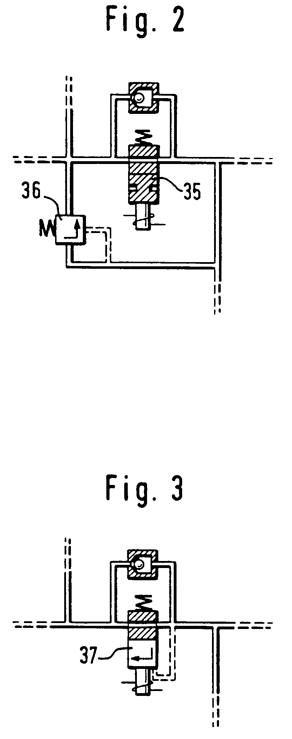

Anstelle des Trennventils 5 in Fig. 1 kann auch ein in Fig. 2 dargestelltes Trennventil 35 mit parallelgeschaltetem Überdruckventil 36 verwendet werden, wie es an sich aus dem Stand der Technik bekannt ist. Der regelnde Eingriff des elektronischen Steuergerätes 31 erfolgt dann nur, wenn der Hauptzylinder 1 durch das Bremspedal 3 betätigt wird und die Drucksensoren 32 und 33 einen Hauptzylinderdruck sensieren. Bei unbetätigtem Bremspedal 3 übernimmt das Überdruckventil 36 die Druckbegrenzung. Es ist allerdings auch möglich, durch das Überdruckventil 36 einen definierten Maximaldruck einzustellen, wobei über das Trennventil 35 durch zeitweiliges Umschalten der Förderdruck der Pumpe 19 auf niedrigere Werte begrenzt werden kann.

Das Trennventil 37 nach Fig. 2 vereinigt die Funktionen des Trennventils 35 und des Überdruckventils 36 aus Fig. 2. Die stromlose Grundstellung dieses Trennventils 37 ermöglicht einen weitgehend ungedrosselten Druckmittel strom in beide Richtungen, während die bestromte Schaltstellung des Ventils auf einen Differenzdruck einstellbar ist. Der zu überwindende Differenzdruck zwischen der Druckseite der Pumpe 19 und dem Hauptzylinder läßt sich dabei beispielsweise über einen Proportionalmagneten variieren. Dann ist ein getaktetes Umschalten des Trennventils nicht mehr notwendig. Eine Regelung des Motorstroms bzw. ein elektromagnetisches Schließen des Saugventils 20 ist bei einer Verwendung des Trennventils 37 höchstens dann sinnvoll, wenn vom Hauptzylinder 1 her Druck ansteht. Es ist jedoch auch möglich, bei betätigtem Bremspedal 3 den Differenzdruck des Trennventils 37 entsprechend niedriger einzustellen.

All diese regelnden Maßnahmen, um den Förderdruck der Pumpe 19 zu begrenzen, schließen einander nicht aus und können einzeln oder gemeinsam Anwendung finden.

### Bezugszeichenliste

- 1: Hauptzylinder
- 2: Vorratsbehälter
- 3: Brempedal
- 4: Bremsleitung
- 5: Trennventil
- 6: Bremszweig
- 7: Bremszweig
- 8: Radbremse
- 9: Radbremse
- 10: Einlaßventil
- 11: Einlaßventil
- 12: Rücklaufzweig
- 13: Rücklaufzweig
- 14: Auslaßventil
- 15: Auslaßventil
- 16: Rücklaufleitung
- 17: Niederdruckspeicher
- 18: erste Saugleitung
- 19: Pumpe
- 20: Saugventil
- 21: Druckventil
- 22: Elektromotor
- 23: zweite Saugleitung
- 24: Umschaltventil
- 25: Druckleitung
- 26: Dämpfungskammer
- 27: Drosselstelle
- 28: Hochdruckspeicher
- 29: Speicherleitung
- 30: Schaltventil
- 31: elektronisches Steuergerät
- 32: Drucksensor
- 33: Drucksensor
- 35: Trennventil
- 36: Überdruckventil
- 37: Trennventil

## Patentansprüche

1. Verfahren zur Regelung des Förderdrucks einer ein Saugventil (20) aufweisenden Pumpe (19) in einer hydraulischen Bremsanlage mit einem pedalbetätigten Hauptzylinder (1), der an einen Vorratsbehälter (2) angeschlossen ist, mit einer Radbremse (8) die über eine Bremsleitung (4,6) mit dem Hauptzylinder (1) in Verbindung steht und über eine Rücklaufleitung (12,16) mit einem Niederdruckspeicher (17) verbindbar ist, mit einem Einlaßventil (10) in der Bremsleitung (6) und einem Auslaßventil (14) in der Rücklaufleitung (12), wobei die von einem Elektromotor (22) angetriebene Pumpe (19) mit einer ersten Saugleitung (18) an den Niederdruckspeicher (17) und mit einer zweiten Saugleitung (23) an die Bremsleitung (4) zwischen Hauptzylinder (1) und Einlaßventil (10) angeschlossen ist und mit einer Druckleitung (25) an die Bremsleitung (4) zwischen dem Hauptzylinder (1) und dem Anschluß der zweiten Saugleitung (23) angeschlossen ist, mit einem Trennventil (5) in der Bremsleitung (4) zwischen den Anschlüssen der zweiten Saugleitung (23) und der Druckleitung (25), mit einem Umschaltventil (24) in der zweiten Saugleitung (23) und mit einem elektronischen Steuergerät (31), wobei der Förderdruck der Pumpe (19) durch elektronische Ansteuerung auf einen gewünschten Wert regelbar ist, dadurch **gekennzeichnet**, daß der momentane Förderdruck der Pumpe (19) durch Messung des momentanen Motorstroms und Vergleich mit abgespeicherten Kenngrößen vom elektronischen Steuergerät (31) ermittelt wird und nach Maßgabe des gewünschten Förderdrucks im Vergleich mit dem momentanen Förderdruck das Saugventil (20) der Pumpe (19) elektrisch geschlossen wird.

2. Verfahren nach Anspruch 1, dadurch **gekennzeichnet**, daß der Hauptzylinderdruck in der Bremsleitung (4) zwischen Hauptzylinder (1) und Trennventil (5) von einem Drucksensor (32) gemessen wird.

3. Verfahren nach einem der vorhergehenden Ansprüche, dadurch **gekennzeichnet**, daß das Trennventil (37) auf einen variablen Differenzdruck eingestellt wird.

## Claims

1. Method of controlling the supply pressure of a pump (19) with a suction valve (20) incorporated in a hydraulic brake system which includes a pedal-operated master cylinder (1) connected to a supply reservoir (2), a wheel brake (8) which is connected to the master cylinder (1) by way of a brake line (4, 6) and is connectable to a low-pressure accumulator (17) by way of a return line (12, 16), an inlet valve (10) in the brake line (6) and an outlet valve (14) in the return line (12), wherein the pump (19) is driven by an electric motor (22) and connected to the low-pressure accumulator (17) by way of a first suction line (18) and to the brake line (4) between the master cylinder (1) and the inlet valve (10) by way of a second suction line (23), the pump being connected to the brake line (4) between the master cylinder (1) and the connection of the second suction line (23) by way of a pressure line (25), a separating valve (5) in the brake line (4) between the connections of the second suction line (23) and the pressure line (25), a change-over valve (24) in the second suction line (23) and an electronic control unit (31), with the supply pressure of the pump (19) being controllable by electronic actuation to adopt a desired value,
**characterized** in that the instantaneous supply pressure of the pump (19) is determined by measuring the instantaneous motor current and comparing it with memorized parameters in the electronic control unit (31), and the suction valve (20) of the pump (19) is electrically closed according to the desired supply pressure in comparison with the instantaneous supply pressure.

2. Method as claimed in claim 1,
**characterized** in that the master cylinder pressure in the brake line (4) between the master cylinder (1) and the separating valve (5) is measured by a pressure sensor (32).

3. Method as claimed in any one of the preceding claims,
**characterized** in that the separating valve (37) is adjusted to a variable differential pressure.

## Revendications

1. Procédé de régulation de la pression de refoulement d'une pompe comportant une valve d'aspiration (20) dans un système de freinage hydraulique comportant un maître-cylindre (1) actionné par pédale, qui est raccordé à un réservoir (2), un frein de roue (8), qui communique avec le maître-cylindre (1) par une conduite de frein (4, 6) et peut être mis en communication avec un réservoir basse pression (17) par une conduite de retour (12, 16), une valve d'entrée (10) située dans la conduite de frein (6), une valve de sortie (14) située dans la conduite de retour (12), la pompe (19), entraînée par un moteur électrique (22), pouvant être raccordée par une première conduite d'aspiration (18) à l'accumulateur basse pression (17), par une seconde conduite d'aspiration (23) à la conduite de frein (4) entre le maître-cylindre (1) et la valve d'entrée (10) et par une conduite de refoulement (25) à la conduite de frein (4) entre le maître-cylindre (1) et le raccordement de la seconde conduite d'aspiration (23), une valve d'isolement (5) située dans la conduite de frein (4) entre les raccordements de la seconde conduite d'aspiration (23) et de la conduite de refoulement (25), une valve de commutation (24) située dans la seconde conduite d'aspiration (23) et un appareil de commande électrqnique (31), la pression de refoulement de la pompe (19) étant réglable à une valeur voulue au moyen d'une action de commande électronique, caractérisé en ce que la pression momentanée de refoulement de la pompe (19) est déterminée au moyen d'une mesure du courant momentané du moteur et d'une comparaison avec des valeurs caractéristiques, rangées en mémoire, de l'appareil de commande électronique (31) et, en fonction de la pression de refoulement souhaitée en comparaison de la pression momentanée de refoulement, la valve d'aspiration (20) de la pompe (19) est fermée électriquement.

2. Procédé suivant la revendication 1, caractérisé en ce que la pression de maître-cylindre régnant dans la conduite de frein (4) entre le maître-cylindre (1) et la valve d'isolement (5) est mesurée par un capteur de pression (32).

3. Procédé suivant l'une des revendications précédentes, caractérisé en ce que la valve d'isolement (37) est réglée à une pression différentielle variable.
